# EUROPÄISCHE PATENTSCHRIFT

(11) **EP 2 844 502 B1**
(45) Veröffentlichungstag und Bekanntmachung des Hinweises auf die Patenterteilung: **12.06.2019**
(21) Anmeldenummer: 13718161.6
(22) Anmeldetag: 17.04.2013
(51) Int. Cl.: B60C 11/03, B60C 11/12

(54) **FAHRZEUGLUFTREIFEN**
PNEUMATIC TIRE
PNEUMATIQUE

(30) Priorität: 04.05.2012 DE 102012103930
(43) Veröffentlichungstag der Anmeldung: 11.03.2015
(73) Patentinhaber: Continental Reifen Deutschland GmbH, 30165 Hannover (DE)
(72) Erfinder: RITTWEGER, Stefan, 30163 Hannover (DE); NOGA, Mareile, 30171 Hannover (DE); VERMEHR, Ulrich, 30163 Hannover (DE)
(74) Vertreter: Finger, Karsten
(86) Internationale Anmeldenummer: PCT/EP2013/057953
(87) Internationale Veröffentlichungsnummer: WO 2013/164188

(56) Entgegenhaltungen:
- EP-A1- 2 388 154
- EP-A2- 1 080 949
- JP-A- 2000 025 419

## Beschreibung

Die Erfindung betrifft ein Laufstreifenprofil eines Fahrzeugluftreifens mit von wenigstens zwei Rillen oder Nuten in axialer Richtung A begrenzten radial erhabenen Profilelementen und mit ersten Feineinschnitten, welche sich in der radial äußeren Oberfläche derartiger Profilelemente jeweils zwischen der einen das Profilelement zur einen axialen Seite hin und der anderen das Profilelement zur anderen axialen Seite hin begrenzenden Nut bzw. Rille erstrecken, wobei der erste Feineinschnitt in seiner Haupterstreckungsrichtung in der radial äußeren Oberfläche aus wenigstens einem ersten und einem zweiten im Abstand h von einander hintereinander ausgebildeten Erstreckungsabschnitt, in welchen der erste Feineinschnitt jeweils auf einer gemeinsamen im wesentlichen geradlinigen Erstreckungslinie verlaufend ausgebildet ist, und aus einem zwischen diesen beiden Erstreckungsabschnitten ausgebildeten dritten Erstreckungsabschnitt ausgebildet ist, welcher die beiden Erstreckungsabschnitte verbindet und in welchem der erste Feineinschnitt längs seiner gesamten Erstreckung in der radial äußeren Oberfläche ohne weitere Schnittstelle zur gemeinsamen im wesentlichen geradlinigen Erstreckungslinie außerhalb der gemeinsamen im wesentlichen geradlinigen Erstreckungslinie verlaufend ausgebildet ist, wobei die im wesentlichen geradlinige Erstreckungslinie ihre größte Richtungskomponente in axialer Richtung A des Reifens aufweist.

Derartige Laufstreifenprofile sind beispielsweise aus der JP2000025419A bekannt. Diese Ausbildung ermöglicht eine Verzahnung, der durch den Feineinschnitt voneinander getrennten Profilelementabschnitte, was den Handling-Eigenschaften entgegenkommt. Allerdings bewirkt die Unterbrechung des gradlinigen Abschnitts auch eine Unterbrechung der für den Griff auf Nässe und Eis wichtigen wirkenden Griffkanten, wodurch Nassgriff und Eisgriff beschränkt werden.

Darüber hinaus ist es bekannt, radial erhabene Profilelemente - wie z.B. Profilblockelemente von Profilblockreihen oder Profilrippen - mit Feineinschnitten auszubilden, die sich durch das gesamte Profilelement geradlinig hindurch in axialer Richtung A des Reifens erstrecken. Die durchgehende geradlinige Ausbildung ermöglicht eine über das gesamte Profilelement hinweg durchgehende geradlinige Grifflinie, wodurch der Griff auf nasser Straßenoberfläche oder auch auf Eis begünstigt wird. Derartige rein geradlinig durch das Profilelement hindurch erstreckte Feineinschnitte trennen jedoch über den gesamten Erstreckungsbereich des Profilelements das Profilelement ohne jegliche Verzahnung, was die Handlingeigenschaften beschränkt.

Unabhängig davon ist es auch bekannt, radial erhabene Profilelemente - wie z.B. Profilblockelemente von Profilblockreihen oder Profilrippen - mit sinusförmiger oder wellenförmiger Ausbildung des Feineinschnittsverlauf auszubilden, wodurch eine Art Verzahnung mit vorteilhaften Auswirkungen für Handling ermöglicht wird. Allerdings bieten derartige sinusförmige oder wellenförmige Ausbildungen lediglich einen punktuellen Wirkkontakt im Bereich ihrer Wellenberge oder Wellentäler zum Griff auf nasser Oberfläche oder Eis, wodurch die Nasseigenschaften und Eisgriffeigenschaften beschränkt werden.

**Aus der** gattungsbildenden EP 1 080 949 A2 **ist ein Laufstreifenprofil eines Fahrzeugluftreifens mit von Rillen begrenzten radial erhabenen Profilelementen bekannt, bei dem in der radial äußeren Oberfläche von Profilelementen jeweils ein Feineinschnitt ausgebildet ist, der aus mehreren Erstreckungsabschnitten ausgebildet ist. Die Erstreckungsabschnitte des Feineinschnitts sind alle miteinander verbunden und bilden hierdurch den einen im Profilelement ausgebildeten Feineinschnitt.**

Der Erfindung liegt die Aufgabe zugrunde, mit einfachen ein derartiges Laufstreifenprofil mit Profilelementen und Feineinschnitten auszubilden, bei welchem sowohl gute Handlingeigenschaften als auch gute Griffeigenschaften auf Nässe bzw. Eis ermöglicht werden.

Die Aufgabe wird erfindungsgemäß durch die Ausbildung eines Laufstreifenprofils eines Fahrzeugluftreifens mit von wenigstens zwei Rillen oder Nuten in axialer Richtung A begrenzten radial erhabenen Profilelementen und mit ersten Feineinschnitten, welche sich in der radial äußeren Oberfläche derartiger Profilelemente jeweils zwischen der einen das Profilelement zur einen axialen Seite hin und der anderen das Profilelement zur anderen axialen Seite hin begrenzenden Nut bzw. Rille erstrecken, wobei der erste Feineinschnitt in seiner Haupterstreckungsrichtung in der radial äußeren Oberfläche aus wenigstens einem ersten und einem zweiten im Abstand h von einander hintereinander ausgebildeten Erstreckungsabschnitt, in welchen der erste Feineinschnitt jeweils auf einer gemeinsamen im wesentlichen geradlinigen Erstreckungslinie verlaufend ausgebildet ist, und aus einem zwischen diesen beiden Erstreckungsabschnitten ausgebildeten dritten Erstreckungsabschnitt ausgebildet ist, welcher die beiden Erstreckungsabschnitte verbindet und in welchem der erste Feineinschnitt längs seiner gesamten Erstreckung in der radial äußeren Oberfläche ohne weitere Schnittstelle zur gemeinsamen im wesentlichen geradlinigen Erstreckungslinie außerhalb der gemeinsamen im wesentlichen geradlinigen Erstreckungslinie verlaufend ausgebildet ist, wobei die im wesentlichen geradlinige Erstreckungslinie ihre größte Richtungskomponente in axialer Richtung A des Reifens aufweist, gemäß den Merkmalen von Anspruch 1 gelöst, bei dem zwischen dem ersten und dem zweiten Erstreckungsabschnitt des ersten Feineinschnitts ein zusätzlicher zweiter Feineinschnitt ausgebildet ist, der auf der gemeinsamen im Wesentlichen geradlinigen Erstreckungslinie geradlinig erstreckt und mit Abstand zum ersten Feineinschnitt ausgebildet ist, **und bei dem der erste Erstreckungsabschnitt mit einer Erstreckungslänge a mit (0,25 B) ≤a≤(0,4B) und der zweite Erstreckungsabschnitt mit einer Erstreckungslänge b mit (0,25 B) ≤b ≤(0,4B) ausgebildet ist, wobei B die Gesamterstreckungslänge des ersten Feineinschnitts in Haupterstreckungsrichtung des Feineinschnitts bildet.**

Durch diese Ausbildung wird mit Hilfe des ersten Feineinschnittes, welcher im ersten und zweiten Erstreckungsabschnittes auf einer gemeinsamen gradlinigen Linie geradlinig erstreckt ist und in dem dazwischen ausgebildeten zweiten Feineinschnitt, der sich ebenfalls auf dieser gemeinsamen gradlinigen Erstreckungslinie erstreckt, eine nahezu über den gesamten Erstreckungsbereich des Profilelementes gradlinig erstreckte wirksame Griffkante ermöglicht bei gleichzeitiger Sicherstellung einer Verzahnung durch die Ausbildung des zweiten Erstreckungsbereichs des ersten Feineinschnitts außerhalb und ohne weitere Schnittstelle zu dieser gemeinsamen geradlinigen Erstreckungslinie. Somit kann hierdurch eine gute Verzahnung zur Sicherstellung guter Handling-Eigenschaften bei gleichzeitiger Sicherstellung einer geradlinigen wirksamen Griffkante zur Sicherstellung guten Nassgriffs und guten Eisgriffs ermöglicht werden. Darüber hinaus wird zwischen dem ersten und zweiten Erstreckungsabschnitt ein zusätzlicher Anteil an Nassgriff durch den die dort aus erstem und zweitem Feineinschnitt erhöhte wirksame Feineinschnittsdichte ermöglicht werden. Der erste Feineinschnitt mit seinem Verlauf im dritten Erstreckungsabschnitt, in welchem er den ersten und den zweiten Erstreckungsabschnnitt verbindet, und der zweite Feineinschnitt bewirken eine Art Doppelfeineinschnitt, bei dem der zwischen ihnen nahezu umschlossene Gummimaterialabschnitt wie eine Art Wischlippe verstärkt in den Wasserfilm einer nassen Oberfläche eingreifen kann ohne jedoch starken Abriebkräften, welche am Rande des Profilelementes wirken würden, zu unterliegen. Somit sind durch diese Ausbildung sowohl guter Nassgriff und Eisgriff als auch gute Handlingeigenschaften einfach umsetzbar. **Dabei kann durch die Ausbildung der Erstreckungslängen a und b in einfacher Weise eine große wirksame Länge der Doppelfeineineinschnittsausbildung sichergestellt werden.**

Besonders vorteilhaft ist die Ausbildung eines Laufstreifenprofils gemäß den Merkmalen von Anspruch 2, bei dem der erste Feineinschnitt längs seiner Erstreckung im dritten Erstreckungsabschnitt über eine Erstreckungslänge c mit c≤h - insbesondere mit (0,25 B) ≤c≤(0,4B) - hinweg mit einem geradlinig erstreckten und parallel und im Abstand e zum zweiten Feineinschnitt gemeinsamen im Wesentlichen geradlinigen Erstreckungslinie ausgebildeten Erstreckungsbereich ausgebildet ist, welcher am einen Erstreckungsende des Erstreckungsbereich über einen Verbindungsabschnitt des Feineinschnitts mit dem ersten Erstreckungsabschnitt des Feineinschnitts und am zweiten Erstreckungsende des Erstreckungsbereich über einen weiteren Verbindungsabschnitt des Feineinschnitts mit dem zweiten Erstreckungsabschnitt des Feineinschnitts verbunden ist. Hierdurch kann in einfacher Weise eine große wirksame Länge der Doppelfeineinschnittsausbildung sichergestellt werden. Hierdurch können in ausreichender Weise über die als Einfachfeineinschnitte ausgebildeten Randbereiche die Trockengriffeigenschaften des Reifens und durch den mittleren mit Doppelfeineinschnitt ausgebildeten Bereich die Nass- und Eisgriffeigenschaften optimiert werden. Die Kröpfung des Verlaufs des ersten Feineinschnitts in Erstreckungsabschnitt der Erstreckungslänge c begünstigt darüber hinaus weiter die Trockengriffeigenschaften aus.

Besonders vorteilhaft zur Erzielung langer wirkender Griffkanten ist die Ausbildung eines Laufstreifenprofils gemäß den Merkmalen von Anspruch **3**, bei dem der erste Feineinschnitt in wenigstens einem der beiden - insbesondere in beiden - Verbindungsabschnitten jeweils geradlinig erstreckt ausgebildet ist.

Besonders vorteilhaft ist die Ausbildung eines Laufstreifenprofils gemäß den Merkmalen von Anspruch **4**, bei dem der Abstand e mit 1,5mm ≤ e ≤4mm ausgebildet ist. Durch diese Ausbildung kann bei guter Herstellbarkeit eine hohe Dichte von Feineinschnitten umgesetzt werden.

Besonders vorteilhaft ist die Ausbildung eines Laufstreifenprofils gemäß den Merkmalen von Anspruch **5**, bei dem der zweite Feineinschnitt mit einer Erstreckungslänge d ausgebildet ist, bei dem der zweite Feineinschnitt im Abstand f mit 0,5mm ≤f ≤1,5mm zum ersten Erstreckungsabschnitt des ersten Feineinschnitts und im Abstand g mit 0,5mm ≤g ≤1,5mm zum zweiten Erstreckungsabschnitt des ersten Feineinschnitts ausgebildet ist, und bei dem (d+f+g)=h ausgebildet ist. Die Ausbildung ermöglicht es, die Feineinschnitte zur Sicherstellung einer optimalen Funktion möglichst nahe beieinander auszubilden und gleichzeitig ausreichend große Abstände zur Sicherstellung ausreichender Gummistabilität einzuhalten.

Besonders vorteilhaft ist die Ausbildung eines Laufstreifenprofils gemäß den Merkmalen von Anspruch **6**, bei dem die Erstreckungslängen a, b und c mit (0,8B) ≤(a+b+c)≤B ausgebildet sind. Die Ausbildung ermöglicht in einfacher Weise die Umsetzung eine Optimierung von durch lange Griffkanten begünstigten Eisgriffseigenschaften und von guten Trockengriffeigenschaften.

Besonders vorteilhaft ist die Ausbildung eines Laufstreifenprofils gemäß den Merkmalen von Anspruch **7**, bei dem der erste Feineinschnitt längs seiner Erstreckung mit einer Tiefe t₁ mit (0,5P_{T})≤ t₁≤ P_{T} ausgebildet ist, wobei P_{T} die maximale Tiefe der beiden axial das Profilelement begrenzenden Rillen bildet. Hierdurch kann über den Abrieb des Reifens lange die Wirkung des Feineinschnitts sichergestellt werden.

Besonders vorteilhaft ist die Ausbildung eines Laufstreifenprofils gemäß den Merkmalen von Anspruch **8**, bei dem der zweite Feineinschnitt längs seiner Erstreckung mit einer Tiefe t₂ mit 0,5mm≤t₂≤(0,P_{T}) ausgebildet ist, wobei P_{T} die maximale Tiefe der beiden axial das Profilelement begrenzenden Rillen bildet. Hierdurch kann die Erzielung einer hohen Umfangssteifigkeit des Profilelementes trotz Nutzung der Vorteile der Ausbildung mit den beiden Feineinschnitten einfach begünstigt werden.

Die Erfindung wird im Folgenden an Hand der in den Figuren 1 bis 6 dargestellten Ausführungsbeispiele näher erläutert. Hierin zeigen
- Fig. 1: einen Umfangsabschnitt eines Laufstreifenprofils eines PKW-Fahrzeugluftreifens in Draufsicht,
- Fig.2: einen vergrößert dargestellten Profilelementabschnitt des in Fig.1 dargestellten Laufstreifenprofils in Draufsicht,
- Fig. 3: das Profilelement von Fig.2 in Schnittdarstellung gemäß Schnitt III-III von Fig.2,
- Fig. 4: das Profilelement von Fig.2 in Schnittdarstellung gemäß Schnitt IV-IV von Fig.2,
- Fig. 5: einen Umfangsabschnitt eines Laufstreifenprofils eines PKW-Fahrzeugluftreifens in alternativer Ausführung in Draufsicht und
- Fig. 6: vergrößerte Detaildarstellung des Details VI von Fig.5 in Draufsicht.

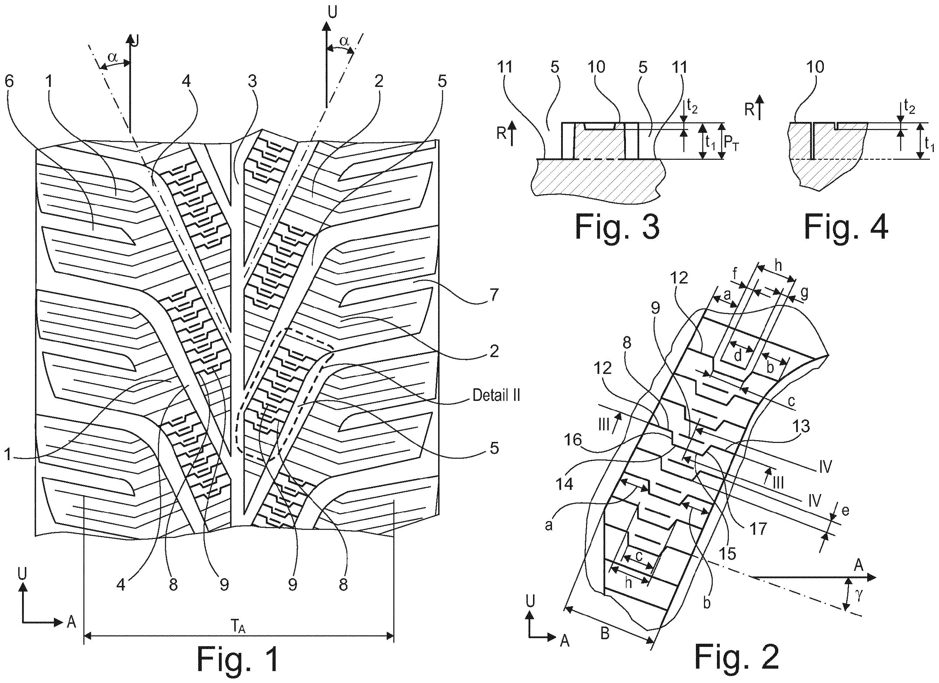

Die Figuren 1 bis 4 zeigen ein Laufstreifenprofil eines Fahrzeugluftreifens für Personenkraftwagen (PKW) mit einer zentralen in Umfangsrichtung U des Fahrzeugluftreifens ausgerichteten und über den Umfang des Fahrzeugluftreifens erstreckten Umfangsrille 3, welche das Laufstreifenprofil in zwei in axialer Richtung A des Fahrzeugluftreifens nebeneinander angeordnete Profilhälften aufteilt. In der in Figur 1 rechts dargestellten Profilhälfte sind über den Umfang des Fahrzeugluftreifens verteilt und in Umfangsrichtung U hintereinander angeordnet rippenförmige, radial erhabene Profilelemente 2 bekannter Art ausgebildet, welche sich in axialer Richtung A jeweils ausgehend von der Umfangsrille 3 in eine Position außerhalb der Bodenaufstandsbreite T_{A} in der rechten Reifenschulter erstrecken und dort enden. Die Bodenaufstandsbreite T_{A} ist die Breite des den Boden berührenden Teils des Laufstreifens, welcher dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die Profilelemente 2 sind in Umfangsrichtung U des Fahrzeugluftreigens gesehen jeweils durch Schrägrillen 5 voneinander beabstandet ausgebildet. Die Schrägrillen 5 sind in radialer Richtung R nach innen hin durch einen Rillengrund 11 und zu den beiden durch die Schrägrille 5 voneinander getrennten Profilelementen 2 jeweils durch eine die zur Schrägrille 5 hin gerichtete Flanke des Profilelementes 2 bildende Rillenwand begrenzt. Die Profilelemente 2 sind in radialer Richtung R nach außen hin durch eine radial äußere Oberfläche 10 begrenzt. Die Schrägrillen 5erstrecken sich ausgehend von der Umfangsrille 3 in axialer Richtung A zur Reifenschulter hin in einem ersten Erstreckungsabschnitt bis in den Erstreckungsbereich der Reifenschulter geradlinig unter einem Neigungswinkel α zur Umfangsrichtung U mit 15 ° ≤ α ≤30 °. Im dargestellten Ausführungsbeispiel ist α = 20 ° gewählt. Im Bereich der Reifenschulter sind die Schrägrillen 5 in ihrem weiteren Erstreckungsverlauf zur axialen Richtung A hin geknickt und erstrecken sich im Anschluss an die Knickstelle unter Einschluss eines Neigungswinkels α zur Umfangsrichtung mit 45°≤ α ≤ 90° im Wesentlichen geradlinig verlaufend bis außerhalb der Bodenaufstandsbreite T_{A}.

Die Erstreckungsrichtung der Schrägrille 5 ist die Erstreckungsrichtung der in der die Profilelemente 2 nach radial außen hin begrenzenden, radial äußeren Oberfläche 10 zwischen den beiden die Schrägrille 5 begrenzenden Rillenwänden gebildeten Mittellinie.

Im Erstreckungsbereich der Reifenschulter ist in den Profilelementen 2 zusätzlich jeweils eine Querrille 7 ausgebildet, die sich in diesem Erstreckungsbereich parallel zu den Schrägrillen 5 jeweils ausgehend von einer Position außerhalb der Bodenaufstandsbreite T_{A} bis in das Profilelement 2 hinein erstreckt und dort endet. Die Querrille 7 teilt dabei dabei das Profilelement 2 im Bereich der Reifenschulter gabelförmig.

Die in Fig. 1 links der Umfangsrille 3 dargestellte Laufstreifenprofilhälfte ist im Wesentlichen spiegelbildlich zu der rechten Laufstreifenprofilhälfte ausgebildet und zusätzlich in Umfangsrichtung U des Fahrzeugluftreifens versetzt ausgebildet. Somit sind auf der linken Laufstreifenprofilhälfte analog zu den rippenförmigen Profilelementen 2 der rechten Laufstreifenprofilhälfte rippenförmige Profilelemente 1 ausgebildet, welche sich in axialer Richtung A zur linken Reifenschulter ausgehend von der Umfangsrille 3 bis in eine Position außerhalb der Bodenaufstandsbreite T_{A} erstrecken und in Umfangsrichtung jeweils voneinander beabstandete, unter Einschluss eines Neigungswinkels α zur Umfangsrichtung verlaufend ausgerichtete Schrägrillen 4 getrennt sind. Der Neigungswinkel α der Schrägrillen 4 ist dabei in einem axial ersten Erstreckungsbereich, ausgehend von der Umfangsrille 3 bis zu einer Knickstelle in der Reifenschulter geradlinig verlaufend, unter Einschluss eines Neigungswinkels α zur Umfangsrichtung U mit 15° ≤ α ≤30 ° ausgebildet. Im dargestellten Ausführungsbeispiel ist α = 20 ° gewählt. Im Bereich der Reifenschulter sind die Schrägrillen 4 in ihrem weiteren Erstreckungsverlauf zur axialen Richtung A hin geknickt und erstrecken sich im Anschluss an die Knickstelle unter Einschluss eines Neigungswinkels α zur Umfangsrichtung mit 45°≤ α ≤ 90° im Wesentlichen geradlinig verlaufend bis außerhalb der Bodenaufstandsbreite T_{A}. Die Schrägrillen 4 sind in radialer Richtung R nach innen hin durch einen Rillengrund 11 und zu den beiden durch die Schrägrille 4 voneinander getrennten Profilelementen 1 jeweils durch eine die zur Schrägrille 4 hin gerichtete Flanke des Profilelementes 1 bildende Rillenwand begrenzt. Die Profilelemente 1 sind in radialer Richtung R nach außen hin durch eine radial äußere Oberfläche 10 begrenzt.

In den Profilelementen sind im Bereich der Reifenschulter Querrillen 6 ausgebildet analog zu den Querrillen 7 der Profilelemente 2.

Die Schrägrillen 4 und 5 und die von ihnen getrennten rippenförmigen Profilelemente 2 bzw. 1 bilden durch den Neigungsverlauf der Rillen 4 und 5 ein V-förmiges Laufstreifenprofil.

Im mittleren axialen Erstreckungsbereich des Laufstreifenprofils zwischen Umfangsrille 3 und rechter Reifenschulter, in welchem die Schrägrillen 5 geradlinig verlaufen, sind in der radial äußeren Oberfläche 10 der Profilelemente 2 längs der Erstreckungsrichtung der die Profilelemente 1 in axialer Richtung A und in Umfangsrichtung U begrenzenden begrenzenden Schrägrillen 5 mehrere hintereinander angeordnete Paare von Feineinschnitten 8 und 9 ausgebildet. In analoger Weise sind im mittleren axialen Erstreckungsbereich des Laufstreifenprofils zwischen Umfangsrille 3 und linker Reifenschulter, in welchem die Schrägrillen 4 geradlinig verlaufen, in der radial äußeren Oberfläche 10 der Profilelemente 1 längs der Erstreckungsrichtung der die Profilelemente 1 in axialer Richtung A und in Umfangsrichtung U begrenzenden Schrägrillen 4 mehrere hintereinander angeordnete Paare von Feineinschnitten 8 und 9 ausgebildet.

Weitere Erläuterungen zur Ausbildung der Feineinschnitte 8 und 9 sind im Folgenden nur noch anhand der in den Fig. 2 bis 4 dargestellten Profilelemente 2 erläutert. Die Feineinschnitte 8 und 9 in den Profilelementen 1 sind in analoger Weise ausgebildet.

Wie in den Figuren 2 bis 4 dargestellt ist, erstrecken sich die Feineinschnitte 8 dabei über die gesamte Erstreckungsbereich des Profilelements 2 zwischen den beiden das jeweilige Profilelement 2 begrenzenden Schrägrillen 5. Der Feineinschnitt 8 erstreckt sich dabei zwischen der Einmündung des Feineinschnittes 8 in die eine das Profilelement 2 begrenzende Rille 5 und der Einmündung des Feineinschnittes 8 in die andere das Profilelement 2 begrenzende Rille 5 mit einer zwischen den beiden Einmündungen gemessenen Erstreckungslänge B, welche den in der radial äußeren Oberfläche 10 gemessenen Abstand der beiden Einmündungsstellen voneinander angibt. Der Feineinschnitt 8 erstreckt sich dabei ausgehend von der einen das Profilelement 2 begrenzenden Rille 5 über einen ersten Erstreckungsabschnitt 12 der Erstreckungslänge a, über einen sich daran unmittelbar anschließenden dritten Erstreckungsabschnitt 14 der Erstreckungslänge h und über einen sich an diesen dritten Erstreckungsabschnitt14 unmittelbar anschließenden zweiten Ersteckungsabschnitt 13 der Erstreckungslänge b, welcher sich bis zur Einmündung des Feineinschnitts 8 in die andere das Profilelement 2 begrenzende Rille 5 erstreckt, bis zur Einmündung des Feineinschnitts 8 in diese andere das Profilelement 2 begrenzende Rille 5.

Der Feineinschnitt 8 erstreckt sich dabei in der radial äußeren Oberfläche 10 in seinem ersten Erstreckungsabschnitt 12 und in seinem zweiten Erstreckungsabschnitt 13 geradlinig verlaufend, wobei der Feineinschnitts 8 im zweiten Erstreckungsabschnitts 13 auf der gradlinigen Verlängerung des Feineinschnitts 8 im ersten Erstreckungsabschnitt 12 ausgebildet ist.

Der Feineinschnitt 8 ist in seinem dritten Erstreckungsabschnitt 14 aus einem mittleren Erstreckungsabschnitt 15 und beiderseits des mittleren Erstreckungsabschnitts 15 jeweils einem Verbindungsabschnitt 16 bzw. 17 ausgebildet. Im mittleren Erstreckungsbereich 15 ist der Feineinschnitt 8 dabei geradlinig und parallel zu seinem Erstreckungsverlauf im ersten Erstreckungsabschnitt 12 und im zweiten Erstreckungsabschnitt 12 verlaufend mit Abstand e zu seinem Erstreckungsverlauf im Erstreckungsabschnitt 12 und 13 ausgebildet. Der Abstand e ist dabei mit 1,5mm ≤ e ≤4mm ausgebildet. Im dargestellten Ausführungsbeispiel ist e = 2 mm ausgebildet. Der mittlere Erstreckungsabschnitt 15 erstreckt sich dabei über eine Erstreckungslänge c. An dem zum ersten Erstreckungsabschnitt 12 hinweisenden Erstreckungsende des mittleren Erstreckungsabschnitts 15 ist der Feineinschnitt 8 in seinem Verlauf unter Einschluss eines Knickes in Richtung zum ersten Erstreckungsabschnitt 12 des Feineinschnitts 8 hin abgeknickt und im Anschluss an die Knickstelle in dem Verbindungsabschnitt 16 geradlinig verlaufend ausgebildet und erstreckt sich dabei bis zum ersten Erstreckungsabschnitt 12. Der Verbindungsabschnitt 16 des Feineinschnittes 8 bildet dabei den Erstreckungsverlauf des Feineinschnittes 8 zwischen erstem Erstreckungsabschnitts 12 und mittleren Erstreckungsabschnitt 15 des dritten Erstreckungsabschnitts 14. Ebenso ist der Feineinschnitt 8 an dem zum zweiten Erstreckungsabschnitt 13 hinweisenden Erstreckungsende des mittleren Erstreckungsabschnitts 15 in seinem Verlauf unter Einschluss eines Knickes in Richtung zum zweiten Erstreckungsabschnitt 13 des Feineinschnitts 8 hin abgeknickt und im Anschluss an die Knickstelle in dem Verbindungsabschnitt 17 geradlinig verlaufend ausgebildet und erstreckt sich dabei bis zum zweiten Erstreckungsabschnitt 13. Der Verbindungsabschnitt 17 des Feineinschnittes 8 bildet dabei den Erstreckungsverlauf des Feineinschnittes 8 zwischen zweitem Erstreckungsabschnitts 13 und mittleren Erstreckungsabschnitt 15 des dritten Erstreckungsabschnitts 14.

Die Gesamterstreckungslänge des Feineinschnittes 8 längs der gradlinigen Erstreckungsrichtung in den Erstreckungsabschnitten 12 und 13 ist die Erstreckungslänge B gemessen in der radial äußeren Oberfläche 10 des Profilelementes 2.
Die Erstreckungslängen a,b,h und c des Feineinschniits 8 werden dabei jeweils längs der geradlinigen Erstreckungsrichtung des Feineinschnittes 8 in dessen ersten Erstreckungsabschnitt 12 und im zweiten Erstreckungsabschnitt 13 gemessen mit B=(a+h+b) und mit c ≤ h.

Die Erstreckungslänge a ist mit (0,25 B)≤a≤(0,4 B) ausgebildet. Die Erstreckungslänge b ist mit (0,25 B)≤b≤(0,4 B) ausgebildet. Die Erstreckungslänge c ist mit (0,25 B)≤c≤(0,4 B) ausgebildet. Dabei ist die Summe der Erstreckungslängen a,b und c mit (0,8 B)≤ (a+b+c) ≤ B ausgebildet. Die Erstreckungslänge c ist zusätzlich mit 5mm ≤ c ≤ (B-a-b) ausgebildet.

Im dargestellten Ausführungsbeispiel ist a = b = c gewählt.

In der Verlängerung des gradlinigen Erstreckungsabschnitts des Feineinschnittes 8 aus dem ersten Erstreckungsabschnitt 12 in Richtung zweiten Erstreckungsabschnitt 13 ist zwischen dem ersten Erstreckungsabschnitt 12 und dem zweiten Erstreckungsabschnitt 13 ein zweiter, gradlinig erstreckter Feineinschnitt 9 ausgebildet. Der zweite Feineinschnitt 9 liegt dabei in der radial äußeren Oberfläche 10 auf der durch den Feineinschnitt 8 im ersten Erstreckungsabschnitt 12 und im zweiten Erstreckungsabschnitt 13 gebildeten Geraden. Der Feineinschnitt 9 endet dabei mit dem zum ersten Erstreckungsabschnitt 12 des Feineinschnitts 8 hingerichteten Erstreckungsende im Abstand f vom ersten Erstreckungsabschnitt 12 und auf mit dem zum zweiten Erstreckungsabschnitt 13 des Feineinschnitts 8 hin gerichteten Erstreckungsende im Abstand g zum zweiten Erstreckungsabschnitt 13 des Feineinschnittes 8. Der Abstand f ist mit 0,5mm≤ f ≤1,5 mm ausgebildet. Der Abstand g ist mit 0,5mm≤ g ≤1,5mm ausgebildet. Beispielsweise sind die Abstände f und g mit f = 1mm und g = 1mm ausgebildet. Der zweite Feineinschnitt 9 ist somit beabstandet zum Feineinschnitt 8 ausgebildet.

Die Rillen 5 sind mit einer Rillentiefe P_{T} ausgebildet, welche der Profiltiefe des Reifens entspricht und ausgehend von der radial äußeren Oberfläche 10 der durch die jeweilige Rille 5 begrenzten Profilelemente 2 in radialer Richtung R gemessenen Abstand zum tiefsten Punkt des die Rille 5 nach radial innen hin begrenzenden Rillengrundes 11 bildet.

Der Feineinschnitt 8 des Profilelementes 2 ist längs seiner Erstreckung in der radial äußeren Oberfläche 10 jeweils mit einer ausgehend von der radial äußeren Oberfläche 10 in radialer Richtung R nach innen hin gemessenen Feineinschnittstiefe t₁ ausgebildet mit (0,5 P_{T}) ≤ t₁ ≤ P_{T}. Der Feineinschnitt 9 ist längs seiner Erstreckung in der radial äußeren Oberfläche 10 jeweils mit einer ausgehend von der radial äußeren Oberfläche 10 in radialer Richtung R nach innen hin gemessenen Feineinschnittstiefe t₂ ausgebildet mit 0,5mm ≤ t₂ ≤ (0,5 P_{T}).

Beispielsweise ist der Feineinschnitt 8 mit einer Tiefe t₁ = P_{T} = 8 mm und der Feineinschnitt 9 mit einer Tiefe t₂ = 3 mm ausgebildet.

Der erste Feineinschnitt 8 ist dabei in einem Ausführungsbeispiel längs seiner gesamten Erstreckung der Erstreckungslänge B mit konstanter Feineinschnittstiefe t₁ ausgebildet. In anderer, nicht dargestellter Ausführung ist der Feineinschnitt 8 mit einer sich längs seiner Erstreckung verändernden Feineinschnittstiefe t₁ ausgebildet. Beispielsweise ist der Feineinschnitt 8 in einer nicht dargestellten Ausführung am Übergang zu den das Profilelement 2 hin begrenzenden Rillen 5 mit einer gegenüber seinem dritten Erstreckungsabschnitt 14 reduzierten Feineinschnittstiefe t₁ ausgebildet, wobei auch in diesem Erstreckungsbereich (0,5 P_{T}) ≤ t₁ ≤ P_{T} gilt.

In dem in Fig.1 und Fig.2 dargestellten Ausführungsbeispiel sind die Profilelemente 2 Rippen, welche sich ausgehend von der Umfangsrille 3 längs der Schrägrillen 5 erstrecken.

In einem anderen - nicht dargestellten - Ausführungsbeispiel sind die Profilelemente 2 Umfangsrippen, welche in bekannter Weise in Umfangsrichtung U des Fahrzeugluftreifens ausgerichtet sich über den gesamten Umfang des Fahrzeugluftreifens erstrecken und in axialer Richtung A des Reifens zu beiden Seiten hin jeweils durch eine in Umfangsrichtung U erstreckte Umfangsrille begrenzt wird. Die Feineinschnitte 8 des Paares von Feineinschnitten 8 und 9 erstrecken sich dabei jeweils ausgehend von der einen Umfangsrille bis zur anderen Umfangsrille durch die Umfangsrippe hindurch. Der Neigungswinkel α zur Umfangsrichtung der das Profilelement begrenzenden Umfangsrillen ist in diesem Ausführungsbeispiel mit α = 0° ausgebildet.

In einem anderen - nicht dargestellten - Ausführungsbeispiel sind die Profilelemente 2 Profilblockelemente einer Profilblockreihe bekannter Art, welche sich über den gesamten Umfang des Fahrzeugluftreifens erstreckt und in axialer Richtung A zu beiden Seiten hin jeweils durch eine Umfangsrille begrenzt wird. Die Profilblockreihe ist in bekannter Weise aus in Umfangsrichtung U des Fahrzeugluftreifens hintereinander angeordneten Profilblockelementen ausgebildet, welche jeweils in Umfangsrichtung U durch Querrillen voneinander beabstandet sind. Die Feineinschnitte 8 der Paare aus Feineinschnitt 8 und 9 erstrecken sich in dieser Ausführung, ausgehend von der einen das Profilblockelement begrenzenden Umfangsrille durch das Profilblockelement hindurch bis zu der anderen das Profilblockelement in axialer Richtung A begrenzenden Umfangsrille.

In den in den Figuren dargestellten und in den oben genannten Ausführungen schließen der Feineinschnitt 9 sowie der geradlinige Erstreckungsverlauf des Feineinschnitts 8 in seinem ersten Erstreckungsabschnitt 12 und der geradlinige Erstreckungsverlauf des Feineinschnitts 8 in seinem zweiten Erstreckungsabschnitt 13 in der radial äußeren Oberfläche 10 des Profilelementes 2 jeweils einen Neigungswinkel γ zur axialen Richtung A ein mit 0 ° ≤ γ ≤ 30 °. In dem in den Fig. 1 bis 4 dargestellten Ausführungsbeispiel ist γ = 10 ° gewählt.

Die Fig.1 zeigt ein weiteres Ausführungsbeispiel, bei dem außerhalb des Erstreckungsabschnitts der Profilelemente 2, in welchem Paare von Feineinschnitten 8 und 9 ausgebildet sind, in der radial äußeren Oberfläche 10 zusätzlich weitere Feineinschnitte 18 bekannter Art ausgebildet sind.

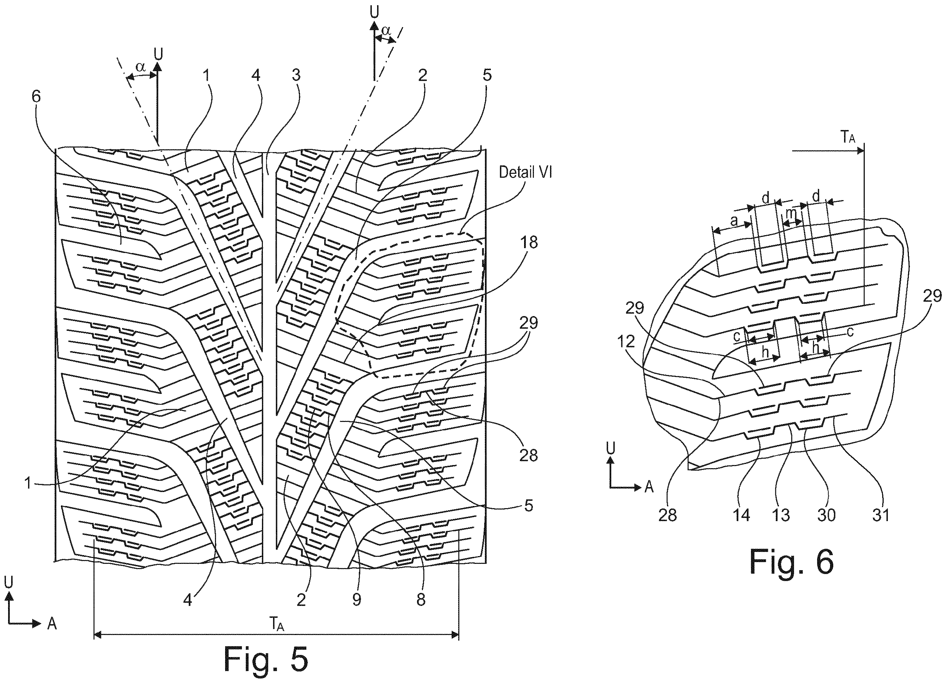

Die Figuren 5 und 6 zeigen ein Ausführungsbeispiel, bei welchem in den Profilelementen 2 zusätzlich zu den zwischen Reifenschulter und Umfangsrille 3 ausgebildeten Paaren von Feineinschnitten 8 und 9 im Erstreckungsbereich des Profilelements 2 in der Reifenschulter jeweils Paare von ersten Feineinschnitten 28 und zweiten Feineinschnitten 29 ausgebildet sind. Die ersten Feineinschnitte 28 sind dabei analog zu den ersten Feineinschnitten 8 der Paare von Feineinschnitten 8 und 9 mit einem ersten Erstreckungsabschnitt 12 und einem zweiten Erstreckungsabschnitt 13 und einem dazwischen ausgebildeten dritten Erstreckungsabschnitt 14 ausgebildet, wobei zwischen erstem Erstreckungsabschnitt 12 und zweitem Erstreckungsabschnitt 13 mit Abstand zum ersten Feineinschnitt 28 analog zum zweiten Feineinschnitt 9 ein zweiter Feineinschnitt 29 ausgebildet ist. Zusätzlich ist bei dem Feineinschnitt 28 jedoch im Anschluss an den zweiten Erstreckungsbereich 13ein weiterer analog ausgebildeter dritter Erstreckungsabschnitt 30 und in dessen Folge ein weiterer analog ausgebildeter zweiter Erstreckungsabschnitt 31 ausgebildet. Der Erstreckungsverlauf des Feineinschnitts 28 im zweiten Erstreckungsabschnitt 31 stellt in Analogie zum zweiten Erstreckungsabschnitts 13 des Feineinschnittes 8 im Wesentlichen eine gradlinige Verlängerung des Erstreckungsverlaufs des Feineinschnitts 28 m zweiten Erstreckungsbereichs 13 und im ersten Erstreckungsbereich 12 dar. Innerhalb des weiteren dritten Erstreckungsabschnitts 30 ist der Feineinschnitt 28 ebenso wie im ersten dritten Erstreckungsabschnitt 14 in einem mittleren Erstreckungsabschnitts gradlinig und im Wesentlichen parallel zur Erstreckung des Feineinschnitts 28 in den Erstreckungsabschnitten 12, 13 und 31 ausgebildet, welcher über einem Verbindungsabschnitt zum Erstreckungsabschnitt 13 und über einen Verbindungsabschnitt zum Erstreckungsabschnitt 31 verbunden ist. In Analogie zum zweiten Feineinschnitt 29 im ersten dritten Erstreckungsabschnitt 14 ist ein weiterer Feineinschnitt 29 im zweiten dritten Erstreckungsabschnitt 30 des Feineinschnitts 28 beabstandet zum Feineinschnitt 28 ausgebildet.

Bei dieser Ausführung sind die Erstreckungslängen c der mittleren Erstreckungsabschnitte der dritten Erstreckungsabschnitte 14 bzw. 30 jeweils mit 5 mm ≤ c ≤ 15 mm, die Erstreckungslänge d der zweiten Feineinschnitte 29 jeweils mit 4 mm ≤ d ≤ 13 mm ausgebildet. Der den Abstand zwischen den beiden dritten Erstreckungsbereichen 14 und 30 bestimmende erste zweite Erstreckungsabschnitt ist dabei mit einer Erstreckungslänge m ausgebildet mit 2 mm ≤ m ≤ 10 mm ist.

Der weitere zweite Erstreckungsabschnitt 31 erstreckt sich dabei ausgehend von dem dritten Erstreckungsabschnitt 20 in axialer Richtung A wenigstens bis zum Rand der Bodenaufstandsbreite T_{A}. Der Erstreckungsbereich 12 des Feineinschnitts 28 erstreckt sich mit seinem die Verlängerung des Ertreckungsverlaufes des Feineinschnitts 28 im Erstreckungsabschnitt 13 und 31 sowie der zweiten Feineinschnitte 29 bildenden Erstreckungsverlauf bis zu einer Knickstelle im Abstand a vom Erstreckungsabschnitt 14 im wesentlichen geradlinig. Im Anschluss an die Knickstelle erstreckt sich der Feineinschnitt geradlinig verlaufend bis zur Mündung in die Rille 5.

### Bezugszeichenliste

### (Teil der Beschreibung)

- 1: Radial erhabenes Profilelement
- 2: Radial erhabenes Profilelement
- 3: Umfangsrille
- 4: Rille
- 5: Rille
- 6: Querrille
- 7: Querrille
- 8: Erster Feineinschnitt
- 9: Zweiter Feineinschnitt
- 10: Radial äußere Oberfläche
- 11: Rillengrund
- 12: Erster Erstreckungsabschnitt
- 13: Zweiter Erstreckungsabschnitt
- 14: Dritter Erstreckungsabschnitt
- 15: Mittlerer Erstreckungsbereich
- 16: Verbindungsabschnitt
- 17: Verbindungsabschnitt
- 18: Feineinschnitt
- 28: erster Feineinschnitt
- 29: zweiter Feineinschnitt
- 30: Mittlerer Erstreckungsbereich
- 31: Weiterer Erstreckungsabschnitt

## Patentansprüche

1. Laufstreifenprofil eines Fahrzeugluftreifens mit von wenigstens zwei Rillen (5) oder Nuten in axialer Richtung A begrenzten radial erhabenen Profilelementen (2) und mit ersten Feineinschnitten (8), welche sich in der radial äußeren Oberfläche (10) derartiger Profilelemente (2) jeweils zwischen der einen das Profilelement (2) zur einen axialen Seite hin und der anderen das Profilelement (2) zur anderen axialen Seite hin begrenzenden Nut bzw. Rille (5) erstrecken, wobei der erste Feineinschnitt (8) in seiner Haupterstreckungsrichtung in der radial äußeren Oberfläche (10) aus wenigstens einem ersten (12) und einem zweiten (13) im Abstand h von einander hintereinander ausgebildeten Erstreckungsabschnitt, in welchen der erste Feineinschnitt (8) jeweils auf einer gemeinsamen im wesentlichen geradlinigen Erstreckungslinie verlaufend ausgebildet ist, und aus einem dritten Erstreckungsabschnitt (14) ausgebildet ist, der zwischen dem ersten (12) Erstreckungsabschnitt und dem zweiten Erstreckungsabschnitt (13) ausgebildet ist und die beiden Erstreckungsabschnitte (12,13) verbindet, wobei der erste Feineinschnitt (8) längs seiner gesamten Erstreckung im dritten Erstreckungsabschnitt (14) in der radial äußeren Oberfläche (10) ohne weitere Schnittstelle zu der im wesentlichen geradlinigen Erstreckungslinie außerhalb der im wesentlichen geradlinigen Erstreckungslinie verlaufend ausgebildet ist, und wobei die im wesentlichen geradlinige Erstreckungslinie ihre größte Richtungskomponente in axialer Richtung A des Reifens aufweist,
**wobei zwischen dem ersten (12) und dem zweiten (13) Erstreckungsabschnitt des ersten Feineinschnitts (8) ein zusätzlicher zweiter Feineinschnitt (9) ausgebildet ist, der auf der im Wesentlichen geradlinigen Erstreckungslinie geradlinig erstreckt und mit Abstand zum ersten Feineinschnitt (8) ausgebildet ist**
**dadurch gekennzeichnet,**
**dass der erste Erstreckungsabschnitt (12) mit einer Erstreckungslänge a mit (0,25 B) ≤a ≤(0,4B) und der zweite Erstreckungsabschnitt (13) mit einer Erstreckungslänge b mit (0,25 B) ≤b ≤(0,4B) ausgebildet ist, wobei B die Gesamterstreckungslänge des ersten Feineinschnitts (8) in Haupterstreckungsrichtung des Feineinschnitts (8) bildet.**

2. Laufstreifenprofil gemäß den Merkmalen von Anspruch 1,
bei dem der erste Feineinschnitt (8) längs seiner Erstreckung im dritten Erstreckungsabschnitt (14) über eine Erstreckungslänge c mit c ≤ h - insbesondere mit (0,25 B) ≤c ≤(0,4B) - hinweg mit einem geradlinig erstreckten und parallel und im Abstand e zum zweiten Feineinschnitt (9) gemeinsamen im Wesentlichen geradlinigen Erstreckungslinie ausgebildeten Erstreckungsbereich (15) ausgebildet ist, welcher am einen Erstreckungsende des Erstreckungsbereich (15) über einen Verbindungsabschnitt (16) des Feineinschnitts (8) mit dem ersten Erstreckungsabschnitt (12) des Feineinschnitts (8) und am zweiten Erstreckungsende des Erstreckungsbereich (15) über einen weiteren Verbindungsabschnitt (17) des Feineinschnitts (8) mit dem zweiten Erstreckungsabschnitt (13) des Feineinschnitts (8) verbunden ist.

3. Laufstreifenprofil gemäß den Merkmalen von Anspruch 2,
bei dem der erste Feineinschnitt (8) in wenigstens einem der beiden - insbesondere in beiden - Verbindungsabschnitten (16,17) jeweils geradlinig erstreckt ausgebildet ist.

4. Laufstreifenprofil gemäß den Merkmalen von Anspruch 2 oder 3,
bei dem der Abstand e mit 1,5mm ≤ e ≤4mm ausgebildet ist.

5. Laufstreifenprofil gemäß den Merkmalen von einem oder mehreren der vorangegangenen Ansprüche,
bei dem der zweite Feineinschnitt (9) mit einer Erstreckungslänge d ausgebildet ist, bei dem der zweite Feineinschnitt (9) im Abstand f mit 0,5mm ≤f ≤1,5mm zum ersten Erstreckungsabschnitt (12) des ersten Feineinschnitts (8) und im Abstand g mit 0,5mm ≤g ≤1,5mm zum zweiten Erstreckungsabschnitt (13) des ersten Feineinschnitts (8) ausgebildet ist, und bei dem (d+f+g)=h ausgebildet ist.

6. Laufstreifenprofil gemäß den Merkmalen von einem oder mehreren der vorangegangenen Ansprüche,
bei dem die Erstreckungslängen a, b und c mit (0,8B) ≤(a+b+c)≤ B ausgebildet sind.

7. Laufstreifenprofil gemäß den Merkmalen von einem oder mehreren der vorangegangenen Ansprüche,
bei dem der erste Feineinschnitt (8) längs seiner Erstreckung mit einer Tiefe t₁ mit (0,5P_{T})≤ t₁≤ P_{T} ausgebildet ist, wobei P_{T} die maximale Tiefe der beiden axial das Profilelement (2) begrenzenden Rillen (5) bildet.

8. Laufstreifenprofil gemäß den Merkmalen von einem oder mehreren der vorangegangenen Ansprüche,
bei dem der zweite Feineinschnitt (9) längs seiner Erstreckung mit einer Tiefe t₂ mit 0,5mm≤ t₂≤(0,5P_{T}) ausgebildet ist, wobei P_{T} die maximale Tiefe der beiden axial das Profilelement (2) begrenzenden Rillen (5) bildet.

## Claims

1. Tread profile of a pneumatic vehicle tyre, having radially elevated profile elements (2) which are delimited in an axial direction A by at least two channels (5) or grooves and having first sipes (8) which extend in the radially outer surface (10) of such profile elements (2) in each case between the one groove or channel (5), which delimits the profile element (2) to one axial side, and the other groove or channel (5), which delimits the profile element (2) to the other axial side, wherein the first sipe (8) is, in its main direction of extent in the radially outer surface (10), formed from at least one first (12) and one second (13) extent portion, which extent portions are formed one behind the other with a spacing h to one another and in which extent portions the first sipe (8) is in each case formed so as to run on a common substantially rectilinear extent line, and from a third extent portion (14), which is formed between the first extent portion (12) and the second extent portion (13) and which connects the two extent portions (12, 13), wherein the first sipe (8) is, along its entire extent in the third extent portion (14), formed so as to run in the radially outer surface (10) outside the substantially rectilinear extent line without a further intersection with the substantially rectilinear extent line, and wherein the substantially rectilinear extent line has its greatest directional component in the axial direction A of the tyre,
wherein, between the first (12) and the second (13) extent portion of the first sipe (8), there is formed an additional, second sipe (9) which extends rectilinearly on the substantially rectilinear extent line and which is formed with a spacing to the first sipe (8),
**characterized**
**in that** the first extent portion (12) is formed with an extent length a of (0.25 B) ≤ a ≤ (0.4 B), and the second extent portion (13) is formed with an extent length b of (0.25 B) ≤ b ≤ (0.4 B), wherein B forms the total extent length of the first sipe (8) in the main direction of extent of the sipe (8).

2. Tread profile according to the features of Claim 1, in which the first sipe (8) is, along its extent in the third extent portion (14) over an extent length c of c ≤ h, in particular of (0.25 B) ≤ c ≤ (0.4 B), formed with a rectilinearly extending extent region (15) formed parallel and with a spacing e to the second sipe (9) common substantially rectilinear extent line, which extent region, at one extent end of the extent region (15), is connected by means of a connecting portion (16) of the sipe (8) to the first extent portion (12) of the sipe (8) and, at the second extent end of the extent region (15), is connected by means of a further connecting portion (17) of the sipe (8) to the second extent portion (13) of the sipe (8).

3. Tread profile according to the features of Claim 2, in which the first sipe (8) is in each case of rectilinearly extending form in at least one of the two - in particular in both - connecting portions (16, 17).

4. Tread profile according to the features of Claim 2 or 3,
in which the spacing e is configured such that 1.5 mm ≤ e ≤ 4 mm.

5. Tread profile according to the features of one or more of the preceding claims,
in which the second sipe (9) is formed with an extent length d, in which the second sipe (9) is formed with a spacing f of 0.5 mm ≤ f ≤ 1.5 mm to the first extent portion (12) of the first sipe (8) and with a spacing g of 0.5 mm ≤ g ≤ 1.5 mm to the second extent portion (13) of the first sipe (8), and in which (d+f+g) = h.

6. Tread profile according to the features of one or more of the preceding claims,
in which the extent lengths a, b and c are configured such that (0.8 B) ≤ (a+b+c) ≤ B.

7. Tread profile according to the features of one or more of the preceding claims,
in which the first sipe (8) is formed, along its extent, with a depth t₁ of (0.5 P_{T}) ≤ t₁ ≤ P_{T}, wherein P_{T} forms the maximum depth of the two channels (5) that axially delimit the profile element (2).

8. Tread profile according to the features of one or more of the preceding claims,
in which the second sipe (9) is formed, along its extent, with a depth t₂ of 0.5 mm ≤ t₂ ≤ (0.5 P_{T}), wherein P_{T} forms the maximum depth of the two channels (5) that axially delimit the profile element (2).

## Revendications

1. Sculpture d'un pneumatique de véhicule, la sculpture comprenant des éléments profilés (2), saillant radialement et délimités dans la direction axiale A par au moins deux rainures (5) ou gorges, et des premières incisions fines (8) qui s'étendent dans la surface radialement extérieure (10) de tels éléments profilés (2) entre l'une des gorges ou rainures (5) qui délimite l'élément profilé (2) en direction de l'un des côtés axiaux et l'autre des gorges ou rainures (5) qui délimite l'élément profilé (2) en direction de l'autre des côtés axiaux, la première incision fine (8) étant formée dans sa direction d'extension principale dans la surface radialement extérieure (10) d'au moins une première (12) et une deuxième (13) parties d'extension, qui sont formées à une distance h l'une derrière l'autre et dans lesquelles la première incision fine (8) est formée de manière à s'étendre sur une ligne d'extension commune sensiblement rectiligne, et d'une troisième partie d'extension (14) qui est formée entre la première partie d'extension (12) et la deuxième partie d'extension (13) et qui relie les deux parties d'extension (12, 13), la première incision fine (8) étant formée de manière à s'étendre sur toute son extension dans la troisième partie d'extension (14) dans la surface radialement extérieure (10) sans autre interface avec la ligne d'extension sensiblement rectiligne à l'extérieur de la ligne d'extension sensiblement rectiligne, et la ligne d'extension sensiblement rectiligne ayant sa plus grande composante directionnelle dans la direction axiale A du pneumatique,
une deuxième incision fine supplémentaire (9) étant formée entre la première partie d'extension (12) et la deuxième partie d'extension (13) de la première incision fine (8), laquelle deuxième incision fine supplémentaire (9) s'étend de manière rectiligne sur la ligne d'extension sensiblement rectiligne et est formée à distance de la première incision fine (8), **caractérisée en ce que**
la première partie d'extension (12) a une longueur d'extension a telle que (0,25 B) ≤ a ≤0,4 B) et la deuxième partie d'extension (13) a une longueur d'extension b telle que (0,25 B) ≤ b ≤0,4 B), B étant la longueur d'extension totale de la première incision fine (8) dans la direction d'extension principale de l'incision fine (8).

2. Sculpture de pneumatique selon les caractéristiques de la revendication 1, la première incision fine (8) étant formée le long de son extension dans la troisième partie d'extension (14) sur une longueur d'extension c telle que c ≤ h, en particulier (0,25 B) ≤ c ≤0,4 B), avec une région d'extension (15) rectiligne qui est formée parallèlement et à une distance e de la deuxième incision fine (9) en commun ligne d'extension sensiblement rectiligne et qui est reliée à une extrémité d'extension de la région d'extension (15), par une partie de liaison (16) de l'incision fine (8), à la première partie d'extension (12) de l'incision fine (8) et à la deuxième extrémité d'extension de la région d'extension (15), par une autre partie de liaison (17) de l'incision fine (8), à la deuxième partie d'extension (13) de l'incision fine (8) .

3. Sculpture de pneumatique selon les caractéristiques de la revendication 2, la première incision (8) étant formée dans au moins une des deux, en particulier les deux, parties de liaison (16, 17), de manière rectiligne.

4. Sculpture de pneumatique selon les caractéristiques de la revendication 2 ou 3, la distance e étant telle que 1,5 mm ≤ e ≤ 4 mm.

5. Sculpture de pneumatique selon les caractéristiques d'une ou de plusieurs des revendications précédentes,
la deuxième incision fine (9) étant formée avec une longueur d'extension d pour laquelle la deuxième incision fine (9) est formée à une distance f telle que 0,5 mm ≤ f ≤ 1,5 mm de la première partie d'extension (12) de la première incision fine (8) et à la distance g telle que 0,5 mm ≤ g ≤ 1,5 mm de la deuxième partie d'extension (13) de la première incision fine (8) et avec (d+f+g)=h.

6. Sculpture de pneumatique selon les caractéristiques d'une ou de plusieurs des revendications précédentes, les longueurs d'extension a, b et c étant telles que (0,8B) ≤ (a+b+c) ≤ B.

7. Sculpture de pneumatique selon les caractéristiques d'une ou de plusieurs des revendications précédentes, la première incision fine (8) étant formée le long de son extension avec une profondeur t₁ telle que (0,5P_{T}) ≤ t₁ ≤ P_{T}, P_{T} étant la profondeur maximale des deux rainures (5) délimitant axialement l'élément profilé (2).

8. Sculpture de pneumatique selon les caractéristiques d'une ou de plusieurs des revendications précédentes,
la deuxième incision fine (9) étant formée le long de son extension avec une profondeur t₂ telle que 0,5 mm ≤ t₂ ≤ (0,5 P_{T}), P_{T} étant la profondeur maximale des deux rainures (5) délimitant axialement l'élément profilé (2).
